# FASCICULE DE BREVET EUROPEEN

(11) **EP 4 095 043 B1**
(45) Date de publication et mention de la délivrance du brevet: **06.12.2023**
(21) Numéro de dépôt: 22174631.6
(22) Date de dépôt: 20.05.2022
(51) Int. Cl.: B64D 35/08, B64C 27/12, B64D 27/02, B64U 50/19, B64U 50/11, B64D 27/24, F16H 1/22

(54) **INSTALLATION MOTRICE DE TYPE MODULAIRE POUR UN GIRAVION ET GIRAVION ASSOCIÉ**
MODULARER ANTRIEB FÜR EIN DREHFLÜGELFLUGZEUG UND ENTSPRECHENDES DREHFLÜGELFLUGZEUG
MODULAR POWER PLANT FOR A ROTORCRAFT AND ASSOCIATED ROTORCRAFT

(30) Priorité: 28.05.2021 FR 2105605
(43) Date de publication de la demande: 30.11.2022
(73) Titulaire: Airbus Helicopters, 13725 Marignane Cedex (FR)
(72) Inventeur: FAGES, Douchane, 13760 SAINT-CANNAT (FR)
(74) Mandataire: GPI Brevets

(56) Documents cités:
- WO-A-88/06689
- DE-A1- 19 707 124
- US-A- 5 135 442
- US-A- 5 528 960
- US-A1- 2010 013 223
- US-A1- 2015 360 774
- US-A1- 2019 300 193
- US-A1- 2020 407 052

## Description

La présente invention se rapporte au domaine des installations motrices de type modulaire destinées à équiper un giravion.

De telles installations motrices peuvent en outre comprendre une ou plusieurs motorisations de type à combustion et/ou une ou plusieurs motorisations de type électrique.

De façon générale, de telles installations motrices sont dites de type modulaire car chacune de leur motorisation peut être ultérieurement modifiée, adaptée ou remplacée en tout ou partie par une autre motorisation d'un type différent et/ou d'une puissance différente en fonction des besoins de l'utilisateur ou même d'une mission particulière.

Le document FR 3 089 205 décrit un tel giravion comportant une installation motrice de type modulaire. Ce giravion présente alors au moins une motorisation de type à combustion ou de type électrique et une boîte de transmission de puissance principale pour transmettre mécaniquement un couple moteur généré par la ou les motorisations à au moins un rotor de sustentation.

En outre, le giravion comporte également au moins deux interfaces de connexion mécanique connectées mécaniquement à la boîte de transmission de puissance principale, une première interface de connexion mécanique reliant mécaniquement la boîte de transmission de puissance principale à la première motorisation et une deuxième interface de connexion mécanique étant laissée libre ou reliant mécaniquement la boîte de transmission de puissance principale à une deuxième motorisation.

Le document FR 2 962 404 décrit quant à lui un aéronef hybride comportant une première motorisation de type à combustion et une deuxième motorisation de type électrique. En outre, un tel aéronef hybride comporte également une unique boîte de transmission de puissance principale reliée à la première motorisation et la deuxième motorisation.

Chaque motorisation comporte sa propre entrée dans la boîte de transmission de puissance principale. Une telle installation motrice n'est donc pas de type modulaire, et ne peut pas s'adapter à une ou plusieurs motorisations.

Par ailleurs, le document EP 2 735 512 décrit un aéronef hybride comportant une boîte de transmission de puissance principale, une première motorisation de type à combustion et une deuxième motorisation de type électrique. Cependant dans ce cas, la deuxième motorisation permet d'entraîner un arbre de transmission agencé entre la première motorisation et la boîte de transmission de puissance principale.

Il est également connu un giravion présentant une installation motrice comportant une machine électrique fonctionnant en mode alternateur et connectée sur une sortie de la boîte de transmission de puissance principale. Pour certaines phases de vol, une telle machine électrique peut également fonctionner en mode moteur, l'arbre de sortie de la boîte de transmission de puissance principale devenant alors un arbre d'entrée pour transmettre une puissance mécanique à au moins un rotor. Cette solution permet ainsi de limiter le nombre d'entrées permettant de connecter différentes motorisations, mais peut nécessiter l'utilisation d'un moyen de conjugaison mécanique agencé entre la machine électrique et le ou les moteurs thermiques. Un tel moyen de conjugaison mécanique peut être délicat à obtenir en raison des vitesses de rotation très différentes de la machine électrique et du ou des moteurs thermiques.

Il est également connu, tel que divulgué par le document US 2015/360774 A1, un aéronef à rotors basculants comprenant un mât rotor 101 pouvant tourner autour d'un axe de conversion.

En outre, des groupes moteurs 207a-207c sont commandés de façon sélective afin de faire pivoter le mât rotor 101 entre un mode avion, dans lequel le mât rotor 101 est essentiellement horizontal, et un mode hélicoptère dans lequel le mât rotor 101 est essentiellement vertical.

Un système différentiel extérieur 203 et un système différentiel intérieur 205 fonctionnent pour faire tourner le mât rotor 101 autour de l'axe de conversion.

Ces systèmes différentiels 203, 205 sont redondants car si l'un des systèmes différentiels extérieur 203 ou intérieur 205 tombe en panne et se bloque, le système différentiel restant sain peut encore fonctionner pour faire tourner le mât rotor 101 dans toute la plage de mouvement, mais à une vitesse réduite. Dans un mode de réalisation dans lequel le système différentiel externe 203 et le système différentiel interne 205 sont configurés pour fonctionner à la même vitesse, alors la vitesse réduite est égale à la moitié de la vitesse opérationnelle normale.

En outre, le système différentiel extérieur 203 comporte un pignon 703 et le système différentiel intérieur 205 comporte un pignon 713. L'axe de rotation de ces pignons 703, 713 est alors agencé parallèlement à l'axe de conversion qui est distinct de l'axe de rotation d'un mât rotor.

Cependant, aucune boîte de transmission de puissance principale n'est décrite de manière à transmettre mécaniquement un couple moteur généré par une motorisation à un mât rotor solidaire en rotation d'un rotor de sustentation.

Le document US 2010/013223A1 décrit quant à lui une installation motrice de giravion présentant deux turbomoteurs 253, 254.

Cette installation motrice 200 possède un premier et un deuxième dispositifs d'accouplement externe 210, 220 respectivement pour les premier et deuxième turbomoteurs 253, 254.

Ces premier et deuxième dispositifs d'accouplement externe 210, 220 sont agencés en amont d'une boite de transmission de puissance principale.

Par ailleurs, ces premier et deuxième dispositifs d'accouplement externe 210, 220 comportent des pignons 222 et 232 coopérant avec une roue dentée 204 reliée à un arbre d'entrée de la boite de transmission de puissance principale.

Cependant, le document US 2010/013223A1 ne décrit pas un aspect modulaire d'une telle installation motrice. Rien n'indique en effet, que les premier et deuxième dispositifs d'accouplement externe 210, 220 comportent chacun un carter d'interface et des moyens de solidarisation réversibles permettant de solidariser et d'escamoter chaque carter d'interface avec un carter de boîte de la boite de transmission de puissance principale.

Il est également connu tel que décrit dans le document DE 197 07 124A1 une boîte de transmission de puissance à engrenages. Deux pignons 10 du train de transmission de puissance sont fixés de manière à pouvoir translater par rapport à leurs arbres, pour compenser le jeu entre les dents des engrenages, lorsqu'un flux de puissance est inversé.

Ce document décrit également l'utilisation de pignons 2 à dentures coniques formant des renvois d'angle avec des pignons 4 entraînant un étage de sortie 3 muni d'une roue dentée. Cependant le document DE 197 07 124A1 ne décrit pas un aspect modulaire d'une installation motrice de giravion avec des interfaces de connexion escamotables par rapport à un carter de la boite de transmission de puissance principale.

Le document WO 88/06689 A décrit quant à lui une installation motrice multimoteur équipant un avion.

Le document US 2019/300193 A1 décrit quant à lui une installation motrice multimoteur équipant un drone.

Chaque moteur 24, 26 transmet un couple moteur à une boite de transmission de puissance au moyen d'un arbre d'entrée 34, 35 et d'une interface de connexion.

En outre, une première interface de connexion présente bien un premier pignon d'entrée 112 coopérant avec un premier pignon intermédiaire 116, lui-même engrenant une première roue dentée 120 solidaire d'un arbre de sortie 22.

Une seconde interface de connexion présente quant à elle un second pignon d'entrée 112 coopérant avec un second pignon intermédiaire 116, lui-même engrenant une seconde roue dentée 122 solidaire de l'arbre de sortie 22.

La première et la seconde roue dentées 120 et 122 sont cependant disjointes l'une de l'autre et sont agencées dans des portions distinctes d'un carter de boite de transmission. Une telle architecture ne présente donc pas une unique roue dentée coopérant avec des pignons de deux interfaces de connexion.

La présente invention a alors pour objet de proposer une installation motrice de type modulaire présentant une compacité optimale avec des interfaces de connexion mécanique comportant un nombre de pièces limité.

L'invention se rapporte donc à une installation motrice de type modulaire pour un giravion comportant au moins un rotor de sustentation, cette installation motrice comportant :
- au moins une motorisation de type à combustion ou de type électrique,
- une boîte de transmission de puissance principale, comportant un carter de boîte et une roue dentée agencée dans un volume intérieur délimité au moins partiellement par le carter de boîte, la roue dentée présentant un degré de liberté en rotation autour d'un axe de rotation primaire par rapport au carter de boîte, l'axe de rotation primaire étant confondu ou parallèle à un axe de rotation rotor dudit au moins un rotor de sustentation, la roue dentée transmettant mécaniquement un couple moteur généré par la au moins une motorisation à un mât rotor solidaire en rotation dudit au moins un rotor de sustentation et
- au moins deux interfaces de connexion mécanique, une première interface de connexion mécanique reliant mécaniquement la boîte de transmission de puissance principale à une première motorisation de ladite au moins une motorisation et une deuxième interface de connexion mécanique étant laissée libre ou reliant mécaniquement la boîte de transmission de puissance principale à une deuxième motorisation de ladite au moins une motorisation.

Selon l'invention, une telle installation motrice est remarquable en ce que chaque interface de connexion mécanique comporte un pignon engrenant directement la roue dentée, les pignons étant répartis en azimut autour de l'axe de rotation primaire, chaque pignon présentant un degré de liberté en rotation autour d'un axe de rotation secondaire par rapport au carter de boîte, chaque axe de rotation secondaire étant agencé parallèlement par rapport à l'axe de rotation primaire et en ce que chaque interface de connexion mécanique comporte un carter d'interface et des moyens de solidarisation réversibles permettant de solidariser et alternativement d'escamoter le carter d'interface avec le carter de boîte.

En outre, la roue dentée peut comporter une pluralité de dents à denture droite, ou selon une autre alternative à denture hélicoïdale, voire en chevron, et les pignons comportent des dents complémentaires. La roue dentée et les pignons sont ainsi conjugués et agencés dans le volume intérieur délimité par le carter de boîte.

Selon une première réalisation de l'invention, l'axe de rotation primaire peut être confondu avec un axe de rotation rotor dudit au moins un rotor de sustentation. Dans ce cas, la roue dentée peut être une grande roue entraînant, via par exemple au moins un étage de réduction de vitesse épicycloïdal ou autre, un mât rotor solidaire en rotation dudit au moins un rotor de sustentation.

Selon une seconde réalisation de l'invention, l'axe de rotation primaire peut être distinct de l'axe de rotation rotor dudit au moins un rotor de sustentation. Cependant, l'axe de rotation primaire peut être agencé parallèlement avec l'axe de rotation rotor dudit au moins un rotor de sustentation. Dans ce cas, la roue dentée peut être une roue indépendante coopérant avec une grande roue entraînant quant à elle directement ou indirectement ledit au moins un rotor de sustentation.

Chaque interface de connexion mécanique peut comporter également un arbre d'entrée solidaire en rotation d'un pignon. Chaque arbre d'entrée permet alors de transmettre un couple moteur entre chaque motorisation et chaque pignon. Chaque arbre d'entrée est alors agencé coaxialement avec un axe de rotation secondaire.

En outre, la roue dentée peut être supportée et guidée en rotation directement par le carter de boîte. Un tel agencement permet alors de limiter l'encombrement de l'installation motrice et de limiter le nombre de pièces constituant chaque interface de connexion mécanique.

Par ailleurs, chaque pignon peut être supporté et guidé en rotation directement par le carter de boîte.

En outre, les interfaces de connexion mécanique peuvent alors être démontées et retirées du carter de boîte, par exemple pour réaliser une opération de maintenance et peuvent éventuellement être remplacées en laissant le carter de boîte agencé sur le giravion.

Avantageusement, au moins une desdites au moins deux interfaces de connexion mécanique peut comporter au moins un étage de réduction de vitesse de rotation.

Autrement dit, la première interface de connexion mécanique peut permettre de réduire la vitesse de rotation de la première motorisation et/ou la deuxième interface de connexion mécanique peut permettre de réduire la vitesse de rotation de la deuxième motorisation.

En pratique, chaque étage de réduction de vitesse de rotation peut être formé directement par chaque pignon et la roue dentée. En effet, la roue dentée peut comporter un nombre de dents supérieur au nombre de dents de chaque pignon ce qui a pour effet de réduire la vitesse de rotation de la roue dentée par rapport à la vitesse de rotation de chaque arbre d'entrée.

Selon un exemple de réalisation de l'invention compatible avec les précédents, au moins une desdites au moins deux interfaces de connexion mécanique peut comporter au moins un renvoi d'angle.

Un tel renvoi d'angle peut comporter un couple de pignons coopérants entre eux. Ces pignons sont alors de forme coniques et présentent par exemple des dentures droites, hélicoïdales ou encore éventuellement hypoïdes.

Un tel renvoi d'angle peut alors équiper la première interface de connexion mécanique et/ou la deuxième interface de connexion mécanique. Ce renvoi d'angle permet alors d'agencer perpendiculairement un arbre d'entrée respectivement avec un axe de rotation secondaire.

En pratique, une desdites au moins deux interfaces de connexion mécanique peut comporter un arbre de sortie solidaire en rotation du pignon, l'arbre de sortie transmettant mécaniquement un couple moteur généré par ladite au moins une motorisation à un organe auxiliaire du giravion.

Autrement dit, le pignon est entraîné en rotation par un arbre d'entrée agencé au niveau d'une première face du pignon et le pignon permet alors d'entraîner en rotation l'arbre de sortie agencé au niveau d'une seconde face du pignon opposée à la première face.

Cette interface de connexion mécanique permet alors de transmettre un couple moteur par exemple à un organe auxiliaire tel qu'un rotor arrière du giravion pour contrôler le couple transmis par la rotation d'un rotor de sustentation à la structure du giravion et/ou de piloter les mouvements de lacet du giravion. En outre, l'organe auxiliaire peut également être formé par une ou plusieurs hélices propulsives ou tractives et par une machine électrique fonctionnant en mode générateur permettant de générer un courant électrique pour recharger une batterie notamment.

Selon une première variante de l'invention, la première interface de connexion mécanique peut comporter l'arbre de sortie.

Par suite dans ce cas, la première motorisation permet de transmettre directement un couple moteur à l'organe auxiliaire.

Selon une seconde variante de l'invention, la deuxième interface de connexion mécanique peut comporter l'arbre de sortie.

Dans ce cas, si la deuxième interface de connexion mécanique est laissée libre, seule la première motorisation permet de transmettre un couple moteur à l'organe auxiliaire.

En revanche, si la deuxième interface de connexion mécanique relie mécaniquement la boîte de transmission de puissance principale à une deuxième motorisation, la première motorisation et/ou la deuxième motorisation permettent de transmettre un couple moteur à l'organe auxiliaire.

Avantageusement, lesdites au moins deux interfaces de connexion mécanique peuvent comporter une troisième interface de connexion mécanique étant laissée libre ou reliant mécaniquement la boîte de transmission de puissance principale à une troisième motorisation de ladite au moins une motorisation.

Un tel agencement permet alors d'équiper une même boîte de transmission de puissance principale avec une, deux ou trois motorisations chacune pouvant être de type à combustion ou électrique.

En outre pour équilibrer le giravion, lorsque l'installation motrice comporte une seule motorisation coopérant avec une première interface de connexion mécanique, cette première interface de connexion mécanique est alors agencée au niveau d'un plan médian du giravion. Les deuxième et troisième interfaces de connexion mécanique laissées libres sont quant à elles agencées symétriquement de part et d'autre du plan médian du giravion.

De même, lorsque l'installation motrice comporte deux motorisations à savoir une première motorisation et une deuxième motorisation, la première et la deuxième interfaces de connexion mécanique sont agencées symétriquement de part et d'autre du plan médian du giravion. La troisième interface de connexion mécanique laissée libre est quant à elle agencée au niveau du plan médian du giravion.

Enfin, lorsque l'installation motrice comporte trois motorisations, selon un premier exemple, la première et la deuxième interfaces de connexion mécanique peuvent être agencées symétriquement de part et d'autre du plan médian du giravion. La troisième interface de connexion mécanique est quant à elle agencée au niveau du plan médian du giravion.

Selon un second exemple, la première interface de connexion mécanique peut être agencée au niveau du plan médian du giravion. La deuxième et la troisième interfaces de connexion mécanique sont alors agencées symétriquement de part et d'autre du plan médian du giravion.

En pratique, les axes de rotation secondaires peuvent être répartis en azimut autour de l'axe de rotation primaire d'un angle compris entre 20 degrés et 60 degrés.

Un tel angle de répartition permet en effet de pouvoir s'adapter à toutes les configurations possibles de motorisation à combustion ou électrique et présente un compromis optimal en termes d'encombrement de l'installation motrice et de taille et/ou de puissance des au moins une motorisation.

La présente invention a aussi pour objet un giravion comportant au moins un rotor de sustentation entraîné en rotation par au moins une motorisation choisie parmi le groupe comportant les motorisations de type à combustion et les motorisations de type électrique.

Selon l'invention, un tel giravion est remarquable en ce qu'il comporte une installation motrice de type modulaire précitée.

Autrement dit, un tel giravion comporte au moins deux interfaces de connexion mécanique et peut comporter une ou plusieurs motorisations.

L'invention et ses avantages apparaîtront avec plus de détails dans le cadre de la description qui suit avec des exemples donnés à titre illustratif en référence aux figures annexées qui représentent :
la figure 1, une première vue partielle en trois dimensions d'un giravion conforme à l'invention,
la figure 2, une deuxième vue partielle en trois dimensions du giravion conforme à l'invention,
la figure 3, une troisième vue partielle en trois dimensions du giravion conforme à l'invention,
la figure 4, une première représentation schématique partielle d'une installation motrice conforme à l'invention,
la figure 5, une deuxième représentation schématique partielle d'une installation motrice conforme à l'invention,
la figure 6, une troisième représentation schématique partielle d'une installation motrice conforme à l'invention,
la figure 7, une quatrième représentation schématique partielle d'une installation motrice conforme à l'invention,

Les éléments présents dans plusieurs figures distinctes sont affectés d'une seule et même référence.

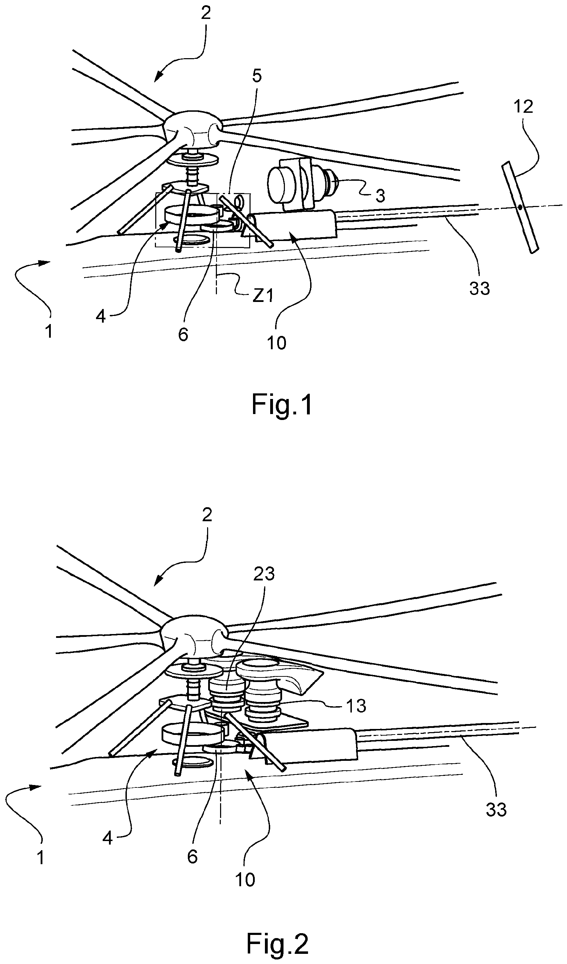

Telle que représentée aux figures 1 à 3, l'invention se rapporte à un giravion 1 muni d'au moins un rotor de sustentation 2 comportant une pluralité de pales. Afin d'entraîner en rotation ce ou ces rotors 2, un tel giravion 1 comporte également une installation motrice 10 présentant au moins une motorisation 3, 13, 23 de type à combustion ou de type électrique.

Selon la figure 1 représentant partiellement une telle installation motrice 10, une première motorisation 3 peut être de type à combustion telle un moteur à pistons ou encore un turbomoteur.

Selon la figure 2, l'installation motrice 10 peut présenter au moins une motorisation de type électrique, par exemple une première motorisation 13 étant de type électrique et une deuxième motorisation 23 également de type électrique.

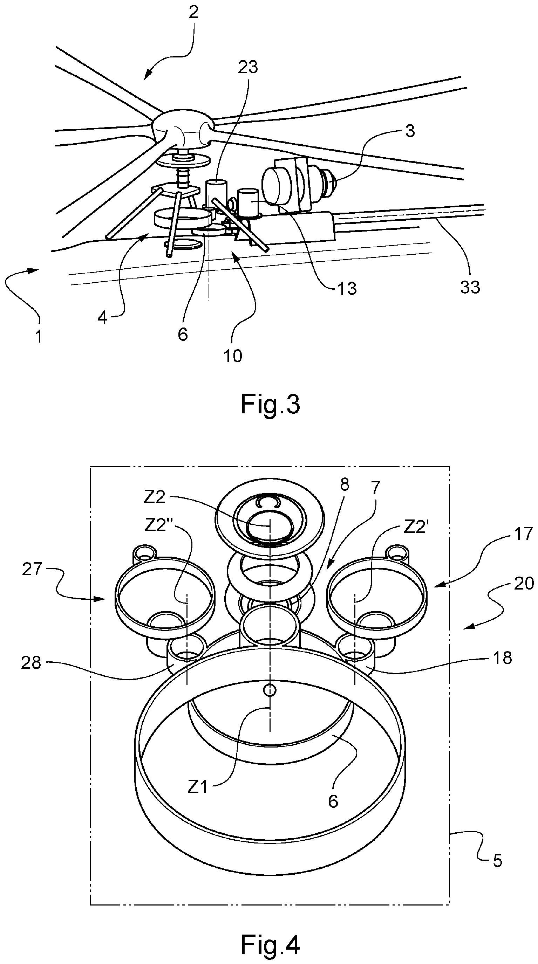

Selon la figure 3, l'installation motrice 10 peut présenter au moins une première motorisation 13 de type électrique, voire une deuxième motorisation 23 également de type électrique, et une troisième motorisation 3 de type à combustion.

En outre, quel que soit le nombre de motorisation, l'installation motrice 10 comporte une boîte de transmission de puissance principale 4, comportant un carter de boîte 5 et une roue dentée 6 agencée dans un volume intérieur délimité au moins partiellement par le carter de boîte 5.

Une telle roue dentée 6 présente alors un degré de liberté en rotation autour d'un axe de rotation primaire Z1 par rapport au carter de boîte 5. Cette roue dentée 6 permet transmettre mécaniquement un couple moteur généré par la ou les motorisations 3, 13, 23 audit au moins un rotor de sustentation 2 via une liaison mécanique. Une telle liaison mécanique peut comprendre un mât rotor, au moins un étage de réduction de vitesse par exemple épicycloïdale....

Une telle installation motrice 10 est dite modulaire car elle comporte au moins deux interfaces de connexion mécanique 7, 17, 27, une première interface de connexion mécanique 7, 17, 27 reliant mécaniquement la boîte de transmission de puissance principale 4 à une première motorisation 3, 13, 23 et une deuxième interface de connexion mécanique 7, 17, 27 étant laissée libre ou reliant mécaniquement la boîte de transmission de puissance principale 4 à une deuxième motorisation 3, 13, 23.

Afin de conférer un encombrement limité à cette installation motrice 10, chaque interface de connexion mécanique 7, 17, 27 comporte un pignon 8, 18, 28 engrenant directement la roue dentée 6. Ces pignons 8, 18, 28 sont alors répartis en azimut autour de l'axe de rotation primaire Z1, de manière équirépartie ou non.

En outre, les pignons 8, 18, 28 respectifs de chaque interface de connexion mécanique 7, 17, 27 présentent un degré de liberté en rotation autour d'axes de rotation secondaire Z2, Z2', Z2" respectifs par rapport au carter de boîte 5. De tels axes de rotation secondaire Z2, Z2', Z2" sont ainsi respectivement agencés parallèlement par rapport à l'axe de rotation primaire Z1.

Par ailleurs, de tels axes de rotation secondaires Z2, Z2', Z2" sont répartis en azimut autour de l'axe de rotation primaire Z1 d'un angle compris entre 20 degrés et 60 degrés.

Tel que représenté à la figure 4, les pignons 8, 18, 28 respectifs de chaque interface de connexion mécanique 7, 17, 27 peuvent être portés par des arbres d'entrée directement guidés en rotation par le carter de boîte 5.

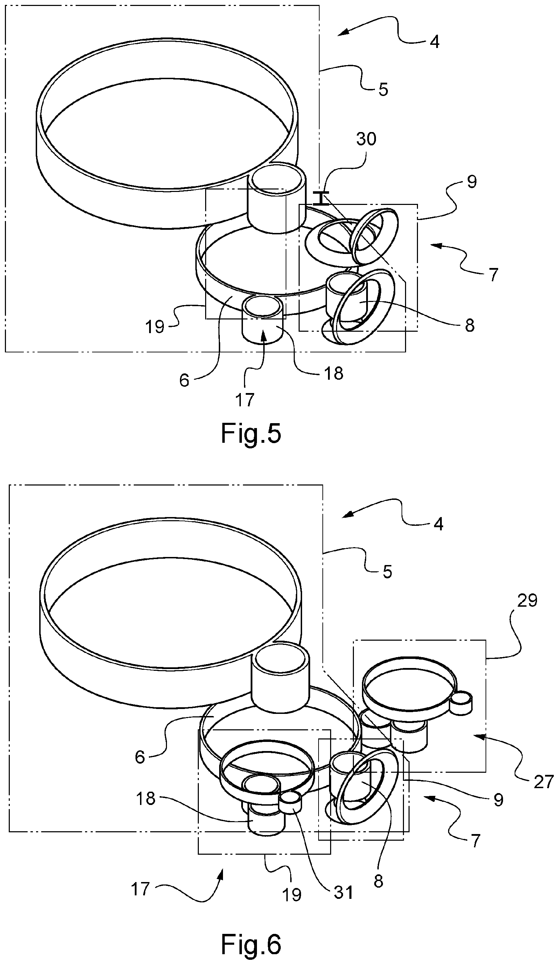

Cependant selon d'autres exemples représentés aux figures 5 à 7, les différentes interfaces de connexion mécanique 7, 17, 27 peuvent également comporter respectivement un carter d'interface 9, 19, 29 et des moyens de solidarisation réversibles 30 permettant de solidariser et alternativement d'escamoter ou de retirer ce carter d'interface 9, 19, 29 avec le carter de boîte 5.

De manière avantageuse, chacune des interfaces de connexion mécanique 7, 17, 27 peut dans ce cas être démontée de la boîte de transmission de puissance principale 4 et éventuellement remplacée par exemple par une autre interface de connexion mécanique correspondant à une autre motorisation.

Ces moyens de solidarisation réversibles 30 peuvent par exemple présenter des vis coopérant avec des écrous ou des taraudages complémentaires ou encore des goujons coopérant avec des écrous de manière à réaliser une solidarisation réversible par serrage de vis et/ou d'écrous de chaque carter d'interface 9, 19, 29 avec le carter de boîte 5.

En outre, telles que représentées à la figure 6, les interfaces de connexion mécanique 7, 17, 27 peuvent comporter au moins un étage de réduction de vitesse de rotation 31. Cet étage de réduction de vitesse de rotation 31 peut se limiter au couple formé par la roue dentée 6 avec les pignons 8, 18, 28 ou encore peut présenter une ou plusieurs autres engrenages.

Cet étage de réduction de vitesse de rotation 31 permet alors de réduire la vitesse de rotation de l'arbre d'entrée et d'entraîner en rotation la roue dentée 6 à une vitesse de rotation inférieure à la vitesse de rotation de la motorisation 3, 13, 23.

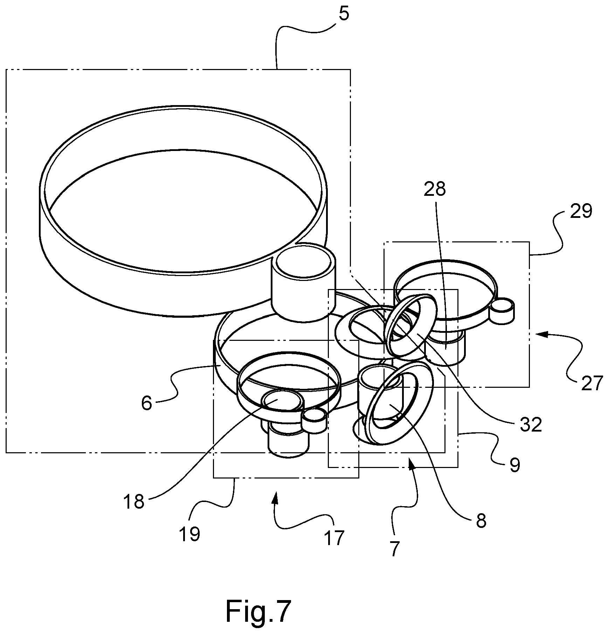

De même, telle que représentée à la figure 7, une interface de connexion mécanique 7, 17, 27 peut comporter au moins un renvoi d'angle 32.

Un tel renvoi d'angle 32 peut comporter par exemple deux pignons coniques à denture hélicoïdale et permet alors d'agencer un arbre d'entrée correspondant à une motorisation 3, 13, 23 selon une orientation perpendiculaire par rapport à l'axe de rotation secondaire Z2, Z2', Z2" du pignon 8, 18, 28 avec lequel le renvoi d'angle 32 coopère.

Avantageusement, l'une des interfaces de connexion mécanique 7, 17, 27 peut comporter un arbre de sortie 33 solidaire en rotation d'un pignon 8, 18 ,28. Un tel arbre de sortie 33 transmet mécaniquement un couple moteur généré par une motorisation 3, 13, 23 à un organe auxiliaire 12 tel un rotor arrière du giravion 1. Un tel rotor arrière est généralement agencé au niveau d'une poutre de queue et permet notamment de contrôler les mouvements en lacet du giravion 1.

La première interface de connexion mécanique 7, 17, 27 peut comporter l'arbre de sortie 33.

Dans ce cas, la première interface de connexion mécanique 7, 17, 27 est à la fois reliée à la première motorisation 3, 13 ,23 par un arbre d'entrée, à la roue dentée 6 par le pignon 8, 18, 28 et à l'organe auxiliaire 12 par l'arbre de sortie 33.

Alternativement, la deuxième interface de connexion mécanique 7, 17, 27 peut comporter l'arbre de sortie 33.

Dans ce cas, la deuxième interface de connexion mécanique 7, 17, 27 peut être à la fois reliée à la deuxième motorisation 3, 13 ,23 par un arbre d'entrée, à la roue dentée 6 par le pignon 8, 18, 28 et à l'organe auxiliaire12 par l'arbre de sortie 33. Cependant, si la deuxième interface de connexion mécanique 7, 17, 27 est laissée libre alors le pignon 8, 18, 28 de cette deuxième interface de connexion mécanique 7, 17, 27 est dans ce cas entraîné en rotation par la roue dentée 6.

Le pignon 8, 18, 28 peut alors transmettre un couple moteur à l'arbre de sortie 33, et par suite à l'organe auxiliaire12.

En pratique et telles que représentées aux figures 4 et 7, les au moins deux interfaces de connexion mécanique 7, 17, 27 peuvent comporter une troisième interface de connexion mécanique 27 qui peut être laissée libre ou encore relier mécaniquement la boîte de transmission de puissance principale 4 à une troisième motorisation 23.

En outre l'organe auxiliaire 12 peut être également formé par une ou plusieurs hélices propulsives ou tractives ou encore alternativement par une machine électrique fonctionnant en mode générateur.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Installation motrice (10) de type modulaire pour un giravion (1) comportant au moins un rotor de sustentation (2), ladite installation motrice (10) comportant :
- au moins une motorisation (3, 13, 23) choisie parmi le groupe comportant les motorisations de type à combustion et les motorisations de type électrique,
- une boîte de transmission de puissance principale (4), comportant un carter de boîte (5) et une roue dentée (6) agencée dans un volume intérieur délimité au moins partiellement par ledit carter de boîte (5), ladite roue dentée (6) présentant un degré de liberté en rotation autour d'un axe de rotation primaire (Z1) par rapport audit carter de boîte (5), ledit axe de rotation primaire (Z1) étant confondu ou parallèle à un axe de rotation rotor dudit au moins un rotor de sustentation (2), ladite roue dentée (6) transmettant mécaniquement un couple moteur généré par ladite au moins une motorisation (3, 13, 23) à un mât rotor solidaire en rotation dudit au moins un rotor de sustentation (2) et
- au moins deux interfaces de connexion mécanique (7, 17, 27), une première interface de connexion mécanique (7, 17, 27) reliant mécaniquement ladite boîte de transmission de puissance principale (4) à une première motorisation (3, 13, 23) de ladite au moins une motorisation (3, 13, 23) et une deuxième interface de connexion mécanique (7, 17, 27) étant laissée libre ou reliant mécaniquement ladite boîte de transmission de puissance principale (4) à une deuxième motorisation (3, 13, 23) de ladite au moins une motorisation (3, 13, 23),
l'installation motrice comportant en outre pour chaque interface de connexion mécanique (7, 17, 27) un pignon (8, 18, 28) engrenant directement ladite roue dentée (6), lesdits pignons (8, 18, 28) étant répartis en azimut autour dudit axe de rotation primaire (Z1), chaque pignon (8, 18, 28) présentant un degré de liberté en rotation autour d'un axe de rotation secondaire (Z2, Z2', Z2") par rapport audit carter de boîte (5), chaque axe de rotation secondaire (Z2, Z2', Z2") étant agencé parallèlement par rapport audit axe de rotation primaire (Z1) ;
l'installation motrice étant **caractérisée en ce que** chaque interface de connexion mécanique (7, 17, 27) comporte un carter d'interface (9, 19, 29) et des moyens de solidarisation réversibles (30) permettant de solidariser et alternativement d'escamoter ledit carter d'interface (9, 19, 29) avec ledit carter de boîte (5).

2. Installation motrice selon la revendication 1,
**caractérisée en ce qu'**au moins une desdites au moins deux interfaces de connexion mécanique (7, 17, 27) comporte au moins un étage de réduction de vitesse de rotation (31).

3. Installation motrice selon l'une quelconque des revendications 1 à 2,
**caractérisée en ce qu'**au moins une desdites au moins deux interfaces de connexion mécanique (7, 17, 27) comporte au moins un renvoi d'angle (32).

4. Installation motrice selon l'une quelconque des revendications 1 à 3,
**caractérisée en ce qu'**une desdites au moins deux interfaces de connexion mécanique (7, 17, 27) comporte un arbre de sortie (33) solidaire en rotation dudit pignon (8, 18 ,28), ledit arbre de sortie (33) transmettant mécaniquement un couple moteur généré par ladite au moins une motorisation (3, 13 ,23) à un organe auxiliaire (12) dudit giravion (1).

5. Installation motrice selon la revendication 4,
**caractérisée en ce que** ladite première interface de connexion mécanique (7, 17, 27) comporte ledit arbre de sortie (33).

6. Installation motrice selon la revendication 4,
**caractérisée en ce que** ladite deuxième interface de connexion mécanique (7, 17, 27) comporte ledit arbre de sortie (33).

7. Installation motrice selon l'une quelconque des revendications 1 à 6,
**caractérisé en ce que** lesdites au moins deux interfaces de connexion mécanique (7, 17, 27) comportent une troisième interface de connexion mécanique (27) étant laissée libre ou reliant mécaniquement ladite boîte de transmission de puissance principale (4) à une troisième motorisation (23) de ladite au moins une motorisation (3, 13, 23).

8. Installation motrice selon l'une quelconque des revendications 1 à 7,
**caractérisée en ce que** lesdits axes de rotation secondaires (Z2, Z2', Z2") sont répartis en azimut autour dudit axe de rotation primaire (Z1) d'un angle compris entre 20 degrés et 60 degrés.

9. Giravion (1) comportant au moins un rotor de sustentation (2) entraîné en rotation par au moins une motorisation (3, 13, 23) choisie parmi le groupe comportant les motorisations de type à combustion et les motorisations de type électrique,
**caractérisé en ce que** ledit giravion comporte une installation motrice (10) de type modulaire selon l'une quelconques des revendications 1 à 8.

## Patentansprüche

1. Modulare Triebwerksanlage (10) für ein Drehflügelflugzeug (1) mit mindestens einem Auftriebsrotor (2), wobei die Triebwerksanlage (10) umfasst:
- mindestens einen Antrieb (3, 13, 23), der aus der Gruppe ausgewählt ist, die Antriebe vom Verbrennertyp und Antriebe vom elektrischen Typ umfasst,
- ein Hauptleistungsübertragungsgetriebe (4), das ein Getriebegestell (5) und ein Zahnrad (6) umfasst, das in einem Innenraum angeordnet ist, der zumindest teilweise von dem Getriebegestell (5) begrenzt ist, wobei das Zahnrad (6) einen Freiheitsgrad für die Drehung um eine primäre Drehachse (Z1) in Bezug auf das Getriebegestell (5) aufweist, wobei die primäre Drehachse (Z1) mit einer Rotordrehachse des mindestens einen Auftriebsrotors (2) zusammenfällt oder parallel zu ihr verläuft, wobei das Zahnrad (6) ein von dem mindestens einen Antrieb (3, 13, 23) erzeugtes Antriebsmoment mechanisch auf einen drehfest mit dem mindestens einen Auftriebsrotor (2) verbundenen Rotormast überträgt, und
- mindestens zwei mechanische Verbindungsschnittstellen (7, 17, 27), wobei eine erste mechanische Verbindungsschnittstelle (7, 17, 27) das Hauptleistungsübertragungsgetriebe (4) mit einem ersten Antrieb (3, 13, 23) des mindestens einen Antriebs (3, 13, 23) mechanisch verbindet und eine zweite mechanische Verbindungsschnittstelle (7, 17, 27) freibleibt oder das Hauptleistungsübertragungsgetriebe (4) mit einem zweiten Antrieb (3, 13, 23) des mindestens einen Antriebs (3, 13, 23) mechanisch verbindet,
wobei die Triebwerksanlage ferner zu jeder mechanischen Verbindungsschnittstelle (7, 17, 27) ein Ritzel (8, 18, 28) aufweist, das direkt mit dem Zahnrad (6) kämmt, wobei die Ritzel (8, 18, 28) azimutal um die primäre Drehachse (Z1) verteilt sind, wobei jedes Ritzel (8, 18, 28) einen Rotationsfreiheitsgrad um eine sekundäre Rotationsachse (Z2, Z2', Z2") in Bezug auf das Getriebegestell (5) aufweist, wobei jede sekundäre Rotationsachse (Z2, Z2', Z2") parallel in Bezug auf die primäre Rotationsachse (Z1) angeordnet ist;
wobei die Triebwerksanlage **dadurch gekennzeichnet ist, dass** jede mechanische Verbindungsschnittstelle (7, 17, 27) ein Schnittstellengestell (9, 19, 29) und reversible Verbindungsmittel (30) umfasst, die es ermöglichen, das Schnittstellengestell (9, 19, 29) mit dem Getriebegestell (5) fest zu verbinden und alternativ dazu einzuziehen.

2. Triebwerksanlage nach Anspruch 1,
**dadurch gekennzeichnet, dass** mindestens eine der mindestens zwei mechanischen Verbindungsschnittstellen (7, 17, 27) mindestens eine Drehzahlreduktionsstufe (31) aufweist.

3. Triebwerksanlage nach einem der Ansprüche 1 bis 2,
**dadurch gekennzeichnet, dass** mindestens eine der mindestens zwei mechanischen Verbindungsschnittstellen (7, 17, 27) mindestens ein Umlenkgetriebe (32) aufweist.

4. Triebwerksanlage nach einem der Ansprüche 1 bis 3,
**dadurch gekennzeichnet, dass** eine der mindestens zwei mechanischen Verbindungsschnittstellen (7, 17, 27) eine Abtriebswelle (33) aufweist, die drehfest mit dem Ritzel (8, 18 ,28) verbunden ist, wobei die Abtriebswelle (33) ein von dem mindestens einen Antrieb (3, 13 ,23) erzeugtes Antriebsmoment mechanisch auf ein Hilfsorgan (12) des Drehflügelflugzeugs (1) überträgt.

5. Triebwerksanlage nach Anspruch 4,
**dadurch gekennzeichnet, dass** die erste mechanische Verbindungsschnittstelle (7, 17, 27) die Abtriebswelle (33) aufweist.

6. Triebwerksanlage nach Anspruch 4, **dadurch gekennzeichnet, dass** die zweite mechanische Verbindungsschnittstelle (7, 17, 27) die Abtriebswelle (33) aufweist.

7. Triebwerksanlage nach einem der Ansprüche 1 bis 6,
**dadurch gekennzeichnet, dass** die mindestens zwei mechanischen Verbindungsschnittstellen (7, 17, 27) eine dritte mechanische Verbindungsschnittstelle (27) aufweisen, die freigelassen ist oder das Hauptkraftübertragungsgetriebe (4) mit einem dritten Antrieb (23) des mindestens einen Antriebs (3, 13, 23) mechanisch verbindet.

8. Triebwerksanlage nach einem der Ansprüche 1 bis 7,
**dadurch gekennzeichnet, dass** die sekundären Drehachsen (Z2, Z2', Z2") azimutal um die primäre Drehachse (Z1) unter einem Winkel zwischen 20 Grad und 60 Grad verteilt sind.

9. Drehflügelflugzeug (1) mit mindestens einem Auftriebsrotor (2), der von mindestens einem Antrieb (3, 13, 23) drehangetrieben ist, der aus der Gruppe ausgewählt ist, die aus Antrieben vom Verbrennertyp und Antrieben vom elektrischen Typ besteht,
**dadurch gekennzeichnet, dass** das Drehflügelflugzeug eine modulare Triebwerksanlage (10) nach einem der Ansprüche 1 bis 8 umfasst.

## Claims

1. Modular-type power plant (10) for a rotorcraft (1), comprising at least one lift rotor (2), said power plant (10) comprising:
- at least one drive (3, 13, 23) chosen from the group comprising combustion-type drives and electric-type drives,
- a main-power gearbox (4), comprising a transmission casing (5) and a sprocket (6) arranged in an inner volume delimited at least partially by said transmission casing (5), said sprocket (6) having a degree of freedom in rotation about a main axis of rotation (Z1) with respect to said transmission casing (5), said main axis of rotation (Z1) being inclusive of or parallel to a rotary axis of rotation of said at least one lift rotor (2), said sprocket (6) transmitting mechanically an engine torque generated by said at least one drive (3, 13, 23) to a rotationally fixed rotor mast of said at least one lift rotor (2), and
- at least two mechanical connection interfaces (7, 17, 27), a first mechanical connection interface (7, 17, 27) linking said main-power gearbox (4) mechanically to a first drive (3, 13, 23) of said at least one drive (3, 13, 23) and a second mechanical connection interface (7, 17, 27) being left free or linking said main-power gearbox (4) mechanically to a second drive (3, 13, 23) of said at least one drive (3, 13, 23),
- the power plant also comprising, for each mechanical connection interface (7, 17, 27), a pinion (8, 18, 28) engaging said sprocket (6) directly, said pinions (8, 18, 28) being distributed in azimuth about said main axis of rotation (Z1), each pinion (8, 18, 28) having a degree of freedom in rotation about a secondary axis of rotation (Z2, Z2', Z2") with respect to said transmission casing (5), each secondary axis of rotation (Z2, Z2', Z2") being arranged in parallel with respect to said main axis of rotation (Z1)
the power plant being **characterised in that** each mechanical connection interface (7, 17, 27) comprises an interface casing (9, 19, 29) and reversible fixing means (30) making it possible alternatively to fix and retract said interface casing (9, 19, 29) to and from said transmission casing (5).

2. Power plant according to claim 1,
**characterised in that** at least one of said at least two mechanical connection interfaces (7, 17, 27) comprises at least one step of reducing rotational speed (31).

3. Power plant according to any one of claims 1 to 2,
**characterised in that** at least one of said at least two mechanical connection interfaces (7, 17, 27) comprises at least one angle transmission (32).

4. Power plant according to any one of claims 1 to 3,
**characterised in that** one of said at least two mechanical connection interfaces (7, 17, 27) comprises an output shaft (33) rotationally fixed to said pinion (8, 18, 28), said output shaft (33) transmitting mechanically an engine torque generated by said at least one drive (3, 13 ,23) to an auxiliary member (1 2) of said rotorcraft (1).

5. Power plant according to claim 4,
**characterised in that** said first mechanical connection interface (7, 17, 27) comprises said output shaft (33).

6. Power plant according to claim 4,
**characterised in that** said second mechanical connection interface (7, 17, 27) comprises said output shaft (33).

7. Power plant according to any one of claims 1 to 6,
**characterised in that** said at least two mechanical connection interfaces (7, 17, 27) comprise a third mechanical connection interface (27) being left free or linking said main-power gearbox (4) mechanically to a third drive (23) of said at least one drive (3, 13, 23).

8. Power plant according to any one of claims 1 to 7,
**characterised in that** said secondary axes of rotation (Z2, Z2', Z2") are distributed in azimuth about said main axis of rotation (Z1) at an angle of between 20 degrees and 60 degrees.

9. Rotorcraft (1) comprising at least one lift rotor (2) rotated by at least one drive (3, 13, 23) chosen from the group comprising combustion-type drives and electric-type drives,
**characterised in that** said rotorcraft comprises a modular-type power plant (10) according to any one of claims 1 to 8.
